# EUROPÄISCHE PATENTSCHRIFT

(11) **EP 1 258 163 B1**
(45) Veröffentlichungstag und Bekanntmachung des Hinweises auf die Patenterteilung: **08.10.2008**
(21) Anmeldenummer: 01913543.3
(22) Anmeldetag: 29.01.2001
(51) Int. Cl.: H04Q 7/38

(54) **VERFAHREN ZUR INTERSYSTEM-VERBINDUNGSWEITERSCHALTUNG**
METHOD FOR TRANSFERRING INTERSYSTEM CONNECTIONS
PROCEDE DE RETRANSMISSION D'UNE CONNEXION INTERSYSTEME

(30) Priorität: 01.02.2000 DE 10004278
(43) Veröffentlichungstag der Anmeldung: 20.11.2002
(73) Patentinhaber: SIEMENS AKTIENGESELLSCHAFT, 80333 München (DE)
(72) Erfinder: FÄRBER, Michael, 82515 Wolfratshausen (DE)
(86) Internationale Anmeldenummer: PCT/DE2001/000343
(87) Internationale Veröffentlichungsnummer: WO 2001/058197

(56) Entgegenhaltungen:
- EP-A- 0 948 231
- WO-A-94/29981
- WO-A-96/23369
- US-A- 5 276 906
- "Universal Mobile Telcommunications System (UMTS);UMTS Terrestrial Radio Access (UTRA); Concept evaluation (UMTS 30.06 version 3.0.0)" EUROPEAN TELECOMMUNICATIONS STANDARD INSTITUTE (ETSI), Dezember 1997 (1997-12), XP002171845
- "Universal Mobile Telcommunications System (UMTS);Physical layer - Measurements (FDD) (3G TS 25.215 version 3.1.1 Release 1999)" EUROPEAN TELECOMMUNICATIONS STANDARD INSTITUTE (ETSI), Januar 2000 (2000-01), XP002171846 in der Anmeldung erwähnt

## Beschreibung

Die Erfindung betrifft ein Verfahren zur Intersystem-Verbindungsweiterschaltung, insbesondere zwischen zwei asynchronen Funk-Kommunikationssystemen. Die Erfindung ist insbesondere für einen Einsatz in einem Mobilfunk- oder drahtlosen Teilnehmeranschlußsystem geeignet.

In Funk-Kommunikationssystemen, beispielsweise dem europäischen Mobilfunksystem der zweiten Generation GSM (Global System for Mobile Communications), werden Informationen wie beispielsweise Sprache, Bildinformation oder andere Daten mit Hilfe von elektromagnetischen Wellen über eine Funkschnittstelle übertragen. Die Funkschnittstelle bezieht sich auf eine Verbindung zwischen einer Basisstation und einer Vielzahl von Teilnehmerstationen, wobei die Teilnehmerstationen beispielsweise Mobilstationen oder ortsfeste Funkstationen sein können. Das Abstrahlen der elektromagnetischen Wellen erfolgt dabei mit Trägerfrequenzen, die in einem für das jeweilige System vorgesehenen Frequenzband liegen. Für zukünftige Funk-Kommunikationssysteme, beispielsweise das UMTS (Universal Mobile Telecommunications System) oder andere Systeme der 3. Generation sind Frequenzen im Frequenzband von ca. 2000 MHz vorgesehen. Für die 3. Mobilfunkgeneration UMTS sind zwei Modi vorgesehen, wobei ein Modus einen FDD-Betrieb (frequency division duplex) und der andere Modus einen TDD-Betrieb (time division duplex) bezeichnen. Diese Modi finden ihre Anwendung in unterschiedlichen Frequenzbändern, wobei beide Modi ein sogenanntes CDMA-Teilnehmerseparierungsverfahren (Code Division Multiple Access) unterstützen.

Für die Beschreibung des Standes der Technik bezüglich der Beobachtung von GSM-Funkzellen ausgehend vom FDD-Modus des digitalen Mobilfunksystems der 3. Generation UMTS zum Zeitpunkt der Anmeldung werden folgende Dokumente der internationalen 3GPP-Standardisierung zugrunde gelegt:
- D1:: TS 25.212 "Multiplexing and channel coding (FDD)", V3.1.1, 1999-12, insbesondere Kapitel 4.4 "Compressed mode",
- D2:: TS 25.215 "Physical layer - Measurements (FDD)", V3.1.1, 1999-12, insbesondere Kapitel 6 "Measurements for UTRA FDD", und
- D3:: RAN 25.231 "Physical layer - Measurements", V0.3.0, 1999-06, insbesondere Kapitel 5.1.3 ff. "Measurements for the handover preparation from UTRA FDD at the UE".
- D4:: "Universal Mobile Telecommunications System (UMTS); UMTS Terrestrial Radio Access (UTRA); Concept Evaluation (UMTS 30.6 version 3.0.0)", ETSI, December 1997.

Für Beschreibungen des Mobilfunksystems der 2. Generation GSM wird als allgemeiner Stand der Technik das Buch von J. Biala "Mobilfunk und Intelligente Netze", Vieweg Verlag, 1995, zugrunde gelegt.

Aufgrund einer parallelen Existenz und einer gewünschten Harmonisierung zwischen den Funk-Kommunikationssystemen der zweiten und dritten Generation soll Teilnehmerstationen, die in einem Funk-Kommunikationssystem eine Verbindung aufgebaut haben, die Möglichkeit einer Weiterschaltung der Verbindung zu einem weiteren Funk-Kommunikationssystem, das unter Umständen einen anderen Übertragungsmodus unterstützt, gegeben werden. Eine derartige Intersystem-Verbindungsweiterschaltung, auch als Intersystem-Handover bezeichnet, setzt eine Synchronisierung der Teilnehmerstation auf das Funk-Kommunikationssystem, das die Verbindung übernehmen soll, bereits vor der Weiterschaltung voraus. Von den Basisstationen des Funk-Kommunikationssystems werden aus diesem Grund periodisch Signale eines sogenannten Synchronisationskanals (SCH - Synchronisation Channel) in dem Funkversorgungsbereich gesendet, mittels derer sich eine Teilnehmerstation auf die Zeitstruktur der Funkschnittstelle des Funk-Kommunikationssystems synchronisieren und anschließend Messungen, beispielsweise bezüglich des Empfangspegels, die für die Entscheidung bezüglich der Weiterschaltung berücksichtigt werden, durchführen kann.

Der FDD-Modus des UMTS-Mobilfunksystem basiert auf einem sogenannten W-CDMA-Teilnehmerseparierungsverfahren, welches sich durch ein kontinuierliches Senden und Empfangen auf zugewiesenen breitbandigen Übertragungskanälen auszeichnet. Im Gegensatz zu der bekannten Zeitschlitzstruktur des GSM-Mobilfunksystems und des TDD-Modus des UMTS-Mobilfunksystems stehen einer Teilnehmerstation in dem FDD-Modus keine dedizierten Übertragungspausen beim Wechsel zwischen Senden und Empfangen zur Verfügung, um benachbarte Funkzellen oder parallele Mobilfunksysteme, die in einem anderen Frequenzband arbeiten, auszumessen.

Eine Lösung dieses Problems ist die Realisierung einer zweiten Empfängereinrichtung in der Teilnehmerstation, welches jedoch nachteilig zu einer Kostensteigerung, einem zusätzlichen Platzbedarf sowie einem höheren Energieverbrauch der Teilnehmerstation führt.

Aus diesem Grund wurde ein Konzept realisiert, nach dem auch eine Teilnehmerstation mit nur einer Empfangseinrichtung in der Lage ist, Signale in weiteren Frequenzbändern zu detektieren, und beispielsweise für eine Intra- oder Intersystem-Verbindungsweiterschaltung zu nutzen. Dieses Konzept wird als "Compressed Mode" bezeichnet und ist unter anderem in den referenzierten Dokumenten D1 bis D3 erläutert. Dabei werden innerhalb eines Zeitrahmens von 10ms die darin enthaltenen Informationen unter anderem durch verschiedene Verfahren wie Punktierung und Veränderung des Spreizfaktors derart komprimiert, daß eine Übertragungslücke einer bestimmten Länge entsteht. Innerhalb dieser Übertragungslücke kann die Teilnehmerstation die Empfängereinrichtung auf ein weiteres Frequenzband abstimmen und darin gesendete Signale empfangen und auswerten. Der "Compressed Mode" kann sowohl in der Aufwärtsrichtung (Uplink) als auch in der Abwärtsrichtung (Downlink) durchgeführt werden.

Dieses Konzept birgt jedoch auch Nachteile, da beispielsweise durch die Verringerung des Spreizfaktors eine höhere Sendeleistung erforderlich wird, um eine konstante Übertragungsqualität zu gewährleisten. Diese erhöhte Sendeleistung führt zu erhöhten Interferenzstörungen parallel aufgebauter Verbindungen in dem gleichen Frequenzband.

Weiterhin wird durch das Konzept nachteilig die geschlossene Schleife zur Sendeleistungsregelung unterbrochen. Dieses widerspricht dem Prinzip eines DS-CDMA-Systems (Direct Sequence-CDMA), das eine sehr genaue und schnelle Sendeleistungsregelung für die Aufwärtsrichtung bedingt, um durch eine Minimierung der jeweiligen Sendeleistung der Teilnehmerstationen eine optimale Kapazität des Systems zu gewährleisten.

Die Anzahl und Periodizität der Zeitrahmen mit Übertragungslücken wird netzseitig individuell abhängig von jeweiligen Bedingungen und einem aktuellen Bedarf zur Beobachtung weiterer Frequenzbänder bzw. Systeme eingestellt.

Sogenannte Multimode-Teilnehmerstationen werden zu Beginn der Verbreitung des zukünftigen UMTS-Mobilfunksystems zumindest sowohl den GSM-Standard als auch den FDD-Modus des UMTS-Standards unterstützen. Dieses ist vorwiegend für Betreiber, die sowohl beispielsweise eine flächendeckende Versorgung eines ganzes Landes mit dem GSM-Mobilfunksystem als auch eine zunächst örtlich begrenzte Versorgung mit dem UMTS-Mobilfunksytem verwirklichen, von Bedeutung.

Das GSM-Mobilfunksystem weist im Vergleich zu dem UMTS-Mobilfunksystem ein bedeutend kleineres Frequenzkanalraster - 200kHz im Vergleich zu 5MHz beim FDD-Modus - sowie einen größeren Frequenzwiederholabstand (sog. Reuse Factor) - typischerweise 7 im Vergleich zu 1 - auf. Dies erfordert die Beobachtung einer größeren Anzahl benachbarter Funkzellen, die bei einer Intersystem-Verbindungsweiterschaltung von einem FDD-Modus zu einem GSM-System beobachtet werden müssen.

Gemäß dem GSM-Standard müssen von der Teilnehmerstation beispielsweise die Empfangspegel (RSSI - Received Signal Strengh Indicator) von bis zu 32 Nachbarzellen innerhalb eines Zeitraums von 30 Sekunden beobachet werden, und die sechs Nachbarzellen, die die besten Übertragungsverhältnisse bieten, alle 480 Millisekunden zu der aktuell versorgenden Basisstation signalisiert werden. Neben dieser Beobachtung der jeweiligen Empfangspegel müssen zusätzlich noch Informationen des jeweiligen Organisationskanals (BCCH - Broadcast Control Channel) dekodiert und ausgewertet werden.

In dem GSM-Mobilfunksystem wird dieses Problem durch eine Mittelung der gemessenen RSS1 innerhalb eines jeweiligen Zeitrahmens (4,6 ms) sowie durch eine Nutzung eines sogenannten Idleframes, d.h. einem Zeitrahmen, in dem keine Übertragung erfolgt, zum Detektieren der Informationen einer ausgewählten Funkzelle gelöst.

Eine Teilnehmerstation mit einer etablierten Verbindung in dem FDD-Modus des UMTS-Standards kann im Vergleich dazu auf keine derart konzentrierte Messungen zurückgreifen, da eine regelmäßige Verwendung des Compressed Mode zu einer deutlichen Verringerung der Übertragungsqualität führen würde. Aus diesem Grunde wird voraussichtlich in dem FDD-Modus von einer Generierung von Übertragungslücken mit einer Periodizität von 120 ms abgesehen.

Die Übertragungslücken können jedoch jeweils zur Beobachtung mehrerer Frequenzbänder genutzt werden. Dieses ist im Vergleich zu einer Beobachtung mit einer hohen Periodizität effizienter, da die erforderlichen Zeiten zur Steuerung der Empfangseinrichtung entsprechende Verluste verursachen. Nichtsdestotrotz sollte eine ganze Übertragungslücke zur Detektion der Informationen des Organisationskanals einer benachbarten GSM-Funkzelle exklusiv genutzt werden.

Aufgrund des erläuterten negativen Einflusses auf die Übertragungsqualität wird der Compressed Mode nicht permanent genutzt, sondern beispielsweise der Beginn sowie der Umfang der Messungen bei einem ermittelten Bedarf, beispielsweise zur Aufrechterhaltung einer etablierten Verbindung, bestimmt und zu der Teilnehmerstation signalisiert. Für diese Entscheidung einer Aktivierung oder Deaktivierung des Compressed Mode wird der Einsatz eines Schwellwertes, mit dem die jeweils aktuelle Übertragungsqualität der Verbindung verglichen wird, vorgeschlagen.

Ein Nachteil dieser Lösung für die Steuerüng der Verbindungsweiterschaltung von dem FDD-Modus zu dem GSM-Standard liegt in der Notwendigkeit einer großen Anzahl von Messungen mit einer entsprechenden Dekodierung von Informationen, die unter anderem durch den großen Frequenzwiederholabstand sowie die Vielzahl der Frequenzkanäle bedingt sind.

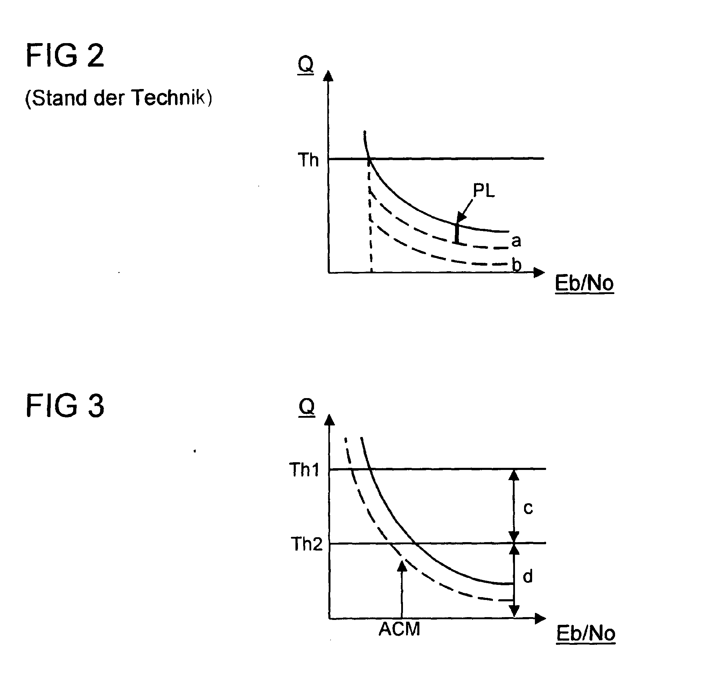

In der FIG 2 ist anhand eines Diagramms die Wirkung einer Verschiebung des Schwellwertes Th (Threshold) für die Übertragungsqualität dargestellt. Dabei ist die Übertragungsqualität Q (Quality) nach einem Signal-Rausch-Verhältnis (Eb/No) aufgetragen, wobei Eb einer gemittelten Energie eines Informationsbits eines Übertragungskanals entspricht. Der Compressed Mode wird bei einem jeweiligen Unterschreiten des Schwellwertes aktiviert.

Wie aus dem Diagramm ersichtlich wird, ist bei einem aktivierten Compressed Mode nur eine geringere Qualität bei einem gleichen Eb/No-Verhältnis erzielbar, ein jeweilger Leistungsverlust (Performance loss) ist die Folge.

Wird der Schwellwert niedrig angesetzt, wie in dem Beispiel b der FIG 2, so ist eine große Anzahl von Übertragungslücken pro Zeiteinheit erforderlich, welches zu einer beschriebenen deutlichen Leistungsbeschränkung führt. Die große Anzahl Übertragungslücken ist notwendig, um in einer möglichst kurzen Zeit alle RSSI-Messungen und Dekodierungen vor einem möglichen Verlust der Verbindung durchzuführen. Dieses kann für den Fall, daß sich die Teilnehmerstation in der Nähe der Funkzellgrenzen befindet und die Übertragungsqualität allgemein bereits sehr niedrig ist, zu einem vorzeitigen Verlust der Verbindung führen.

Wird die der Schwellwert dahingegen hoch angesetzt, wie in dem Beispiel a der FIG 2, erfolgt die zusätzliche Degradierung der Qualität aufgrund des aktivierten Compressed Mode zu einem früheren Zeitpunkt, jedoch steht in diesem Fall eine ausreichende Zeit zur Erfassung und Auswertung aller notwendigen Messungen und Informationen zur Verfügung. Dieses führt zu einer verläßlicheren Aussage über für die Verbindungsweiterschaltung in Betracht zu ziehende Nachbarfunkzellen im Vergleich zu dem Beispiel b. Derzeitige Vorschläge gehen von einem periodischen Einfügen von Übertragungslücken in die kontinuierliche Datenübertragung aus, wobei die Übertragungslücken jeweils zur RSSI-Ermittlung und Dekodierung der Informationssequenzen der Organisationskanäle genutzt werden. Werden diese Übertragungslükken jedoch nur mit einer kleinen Periodizität eingefügt, so dekliniert wiederum die Verläßlichkeit der Aussage über in Betracht kommende Nachbarfunkzellen, wobei die Wahrscheinlichkeit einer Dekodierung von Funkzellen mit einer nur niedrigen Übertragungsqualität innerhalb der von der Teilnehmerstation ermittelten besten sechs Funkzellen zunimmt.

Der Erfindung liegt die Aufgabe zugrunde, ein Verfahren anzugeben, das basierend auf dem bekannten Verfahren ein effizienteres und verläßlicheres Verfahren zur Aktivierung des Compressed Mode verwirklicht. Diese Aufgabe wird durch das Verfahren mit den Merkmalen des Patentanspruchs 1 gelöst. Vorteilhafte Weiterbildungen der Erfindung sind den abhängigen Patentansprüchen zu entnehmen.

Das erfindungsgemäße Verfahren wird vorteilhaft insbesondere für den Fall, daß das erste Funk-Kommunikationssystem ein FDD-Übertragungsverfahren unterstützt, einsetzen. Hierbei kann die Kenntnis über die Zeitstruktur des Synchronisationskanals des zweiten Funk-Kommunikationssystems, das beispielsweise ein GSM-Übertragungsverfahren unterstützt, dazu verwendet werden, gezielt Übertragungspausen, sogenannte transmission gaps, in die kontinuierliche Datenübertragung einzufügen, um den Synchronisationskanal des parallelen Funk-Kommunikationssystems zu empfangen und auszuwerten. Die Übertragungspausen werden bei einem CDMA-Teilnehmerseparierungsverfahren beispielsweise wie vorangehend beschrieben durch eine Verringerung des Spreizfaktors oder durch eine Punktierung der zu übertragenden Daten erzeugt. Dieses erfordert für die restlichen Daten eine höhere Sendeleistung, wodurch wiederum die Interferenzsituation in der Funkzelle verschlechtert wird. Eine Beschränkung der Anzahl der Übertragungspausen durch die zweistufige Detektion von Basisstationen des weiteren Funk-Kommunikationssystems ermöglicht somit vorteilhaft eine Erhöhung der Übertragungskapazität sowie eine Verbesserung der Übertragungsqualität.

Besonders vorteilhaft wird das beschriebene erfindungsgemäße Verfahren in einem als ein Mobilfunksystem oder drahtlosen Teilnehmeranschlußsystem verwirklichten Funk-Kommunikationssystem eingesetzt.

Ausführungsbeispiele der Erfindung werden anhand der beiliegenden Zeichnungen näher erläutert.

Dabei zeigen
- FIG 1: ein Blockschaltbild zweier benachbarter Funk-Kommunikationssysteme,
- FIG 2: ein beispielhaftes Diagramm für das Verfahren nach dem Stand der Technik,
- FIG 3: ein beispielhaftes Diagramm nach dem erfindungsgemäßen Verfahren, und

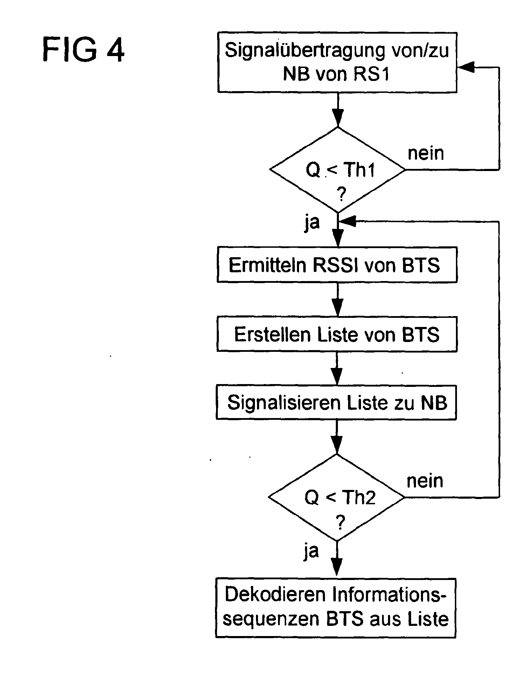

- FIG 4: ein zeitliches Ablaufdiagramm des erfindungsgemäßen Verfahrens.

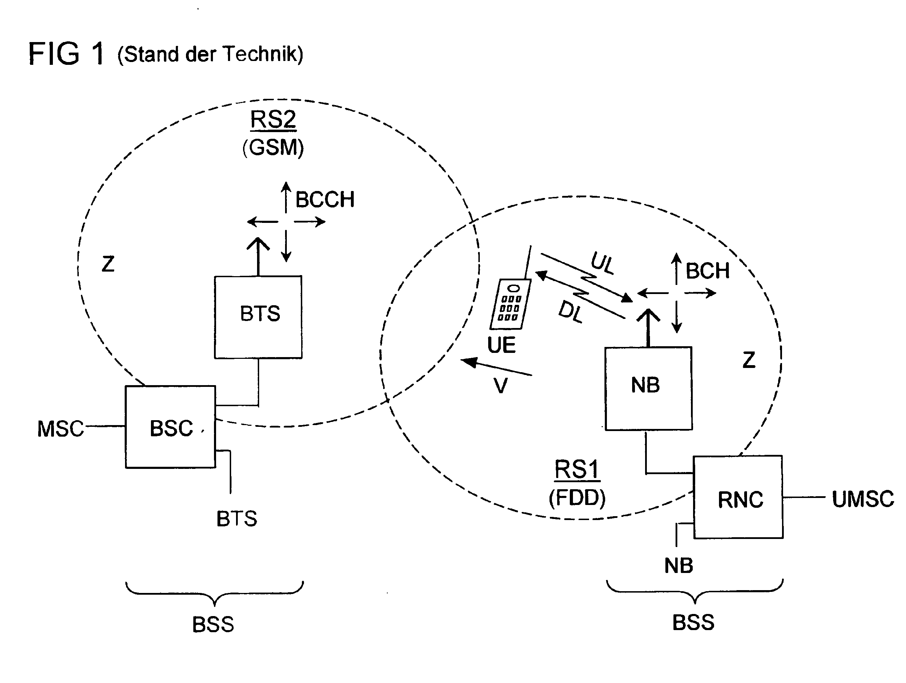

Die FIG 1 zeigt jeweils Ausschnitte aus zwei Mobilfunksystemen RS1, RS2 als Beispiel für Funk-Kommunikationssysteme. Ein Mobilfunksystem besteht jeweils aus einer Vielzahl von Mobilvermittlungsstellen MSC bzw. UMSC (Mobile Switching Center bzw. UMTS-Mobile Switching Center), die zu einem Vermittlungsnetz (SSS - Switching Subsystem) gehören und untereinander vernetzt sind bzw. den Zugang zu einem Festnetz herstellen, und aus jeweils einem oder mehreren mit diesen Mobilvermittlungsstellen MSC, UMSC verbundenen Basisstationssystemen BSS (Base Station Subsystem). Ein Basisstationssystem BSS weist wiederum zumindest eine Einrichtung BSC (Base Station Controller) bzw. RNC (RNC - Radio Network Controller) zum Zuweisen von funktechnischen Ressourcen sowie zumindest eine jeweils damit verbundene Basisstation BTS (Base Transceiver Station) bzw. NB (Node B) auf. Eine Basisstation BTS, NB kann über eine Funkschnittstelle Verbindungen zu Teilnehmerstationen UE (User Equipment), wie z.B. Mobilstationen oder anderweitige mobile und stationäre Endgeräte, aufbauen. Durch jede Basisstation BTS, NB wird zumindest eine Funkzelle Z gebildet. Die Größe der Funkzelle wird in der Regel durch die Reichweite eines allgemeinen Signalisierungskanals BCH (Beacon Channel) bzw. BCCH (Broadcast Control Channel), der von den Basisstationen BTS, NB mit einer jeweils höheren Sendeleistung als die Verkehrskanäle gesendet wird, bestimmt. Bei einer Sektorisierung oder bei hierarchischen Zellstrukturen können pro Basisstation BTS, NB auch mehrere Funkzellen versorgt werden. Die Funktionalität dieser Struktur ist auf andere Funk-Kommunikationssysteme übertragbar, in denen die Erfindung zum Einsatz kommen kann, insbesondere auf Teilnehmerzugangsnetze mit drahtlosem Teilnehmeranschluß.

Das Beispiel der FIG 1 zeigt eine Teilnehmerstation UE, die als eine Mobilstation ausgestaltet ist, und die sich mit einer Geschwindigkeit V von der Funkzelle Z des ersten Mobilfunksystems RS1, das einen FDD-Modus des UMTS-Standards unterstützt, zu einer Funkzelle Z eines zweiten Mobilfunksystems RS2, das einen GSM-Standard unterstützt, bewegt. Die Teilnehmerstation UE hat eine Verbindung zu der beispielhaft dargestellten Basisstation NB des ersten Mobilfunksystems RS1 aufgebaut. Während der Verbindung wertet die Teilnehmerstation UE periodisch Übertragungsverhältnisse der Funkschnittstelle zu sie umgebende Basisstationen, wie beispielsweise der angegebenen Basisstation NB des zweiten Mobilfunksystems RS2 aus, um beispielsweise bei einer Verschlechterung der Übertragungsqualität zu der Basisstation NB des ersten Mobilfunksystems RS1 eine Verbindungsweiterschaltung zu der Basisstation BTS des zweiten Mobilfunksystem RS2 mit besseren Übertragungseigenschaften anzuregen. Das gleiche Verfahren wird beispielsweise auch bei hierarchischen Netzstrukturen verwendet, wenn eine Verbindung zwischen unterschiedlichen Hierarchieebenen, beispielsweise von einer Mikrozelle in eine Makrozelle, die in einem jeweils unterschiedlichen Frequenzband arbeiten, weitergeschaltet wird.

Diese Verbindungsweiterschaltung soll in zukünftigen Funk-Kommunikationssystemen, wie beispielweise dem UMTS-Mobilfunksystem, auch zwischen Funk-Kommunikationssystemen, die unterschiedliche Übertragungsverfahren unterstützen, durchführbar sein. Hierbei kann eine Sprachverbindung beispielsweise von einem FDD-System zu einem GSM-System oder von einem TDD-System einer unteren Hierarchieebene der hierarchischen Netzstruktur zu einem FDD- bzw. GSM-System einer oberen Hierarchieebene weitergeschaltet werden. Weitere Szenarien der Verbindungsweiterschaltung zwischen gleichen oder unterschiedlichen Systemen und Übertragungsverfahren sind denkbar.

In der FIG 3 ist beispielhaft ein dem Diagramm der einleitend beschriebenen FIG 2 entsprechendes Diagramm zur Erläuterung des erfindungsgemäßen Verfahren dargestellt. Im Unterschied zu dem bekannten Verfahren mit einem Vergleich der ermittelten Übertragungsqualität Q (Quality) der Verbindung zu der aktuell versorgenden Basisstation mit einem Schwellwert wird die aktuell ermittelte Übertragungsqualität erfindungsgemäß mit zwei Schwellwerten Th1 und Th2 (Threshold) verglichen.

Unterschreitet die Übertragungsqualität einen ersten Schwellwertes Th1, so wird der Compressed Mode zumindest für Übertragung in Abwärtsrichtung aktiviert und zu der Teilnehmerstation signalisiert. Anders als nach dem bekannten Verfahren der FIG 2 wird in dem Qualitätsintervall zwischen dem ersten Th1 und dem zweiten Schwellwert Th2 nur eine Ermittlung der RSSI der umliegenden Basisstationen, beispielsweise entsprechend einer signalisierten Nachbarzelliste, seitens der Teilnehmerstation UE durchgeführt.

Durch die Tatsache, daß innerhalb einer Übertragungslücke mehrere Nachbarzellen beobachtet werden können, kann der Zeitraum zwischen zwei sukzessiven Übertragungslücken bis zu einer oberen Grenze erhöht werden, die noch eine ausreichende Verläßlichkeit der Bewertung und Reihenfolge der beobachteten Nachbarzellen zuläßt. Das Intervall PL (Performance loss) zwischen den beiden Schwellwerten Th1 und Th2 dient demnach einer Ermittlung einer Liste mit einer beispielsweise entsprechend der jeweiligen Übertragungsqualität ermittelten und gegebenenfalls bewerteten Reihenfolge der für eine Verbindungsweiterschaltung in Betracht kommenden Nachbarfunkzellen bzw. Basisstationen. Hierbei erstellt die Teilnehmerstation UE beispielsweise eine Liste mit den am besten geeigneten sechs Basisstationen.

Wenn die Übertragungsqualität nachfolgend unterhalb des zweiten Schwellwertes Th2 sinkt, so führt die Teilnehmerstation UE eine Dekodierung von Informationssequenzen durch, die von den Basisstationen der ausgewählten benachbarten Funkzellen in einem jeweiligen Organisationskanal gesendet werden. Eine RSSI-Ermittlung wird in diesem Fall nicht mehr durchgeführt, wodurch vorteilhaft keine Erhöhung der Periodizität zur Generierung der Übertragungslücken erforderlich wird. Die bereits für die RSSI-Ermittlung gewählte Periodizität kann auch für die Dekodierung weiterverwendet werden, so daß keine weitere Degradierung der Ubertragungsqualität auftritt.

Vorteilhaft wird durch das erfindungsgemäße Verfahren erreicht, daß kein Kompromiß zwischen RSSI-Messungen und Dekodierung von Informationssequenzen geschlossen werden muß. Das Konzept optimiert das Verfahren hinsichtlich einer möglichst kleinen Periodizität der Übertragungslücken bei einer gleichzeitig verläßlichen Ranglistenbildung der Nachbarzellkandidaten. Nur wenn die Übertragungsqualität unterhalb des zweiten Schwellwertes Th2 fällt, wird die weniger effiziente Dekodierungsprozedur aktiviert, die dann allerdings die Übertragungslücken ausschließlich nutzt. Durch die Tatsache, daß alle Aktionen zwischen dem ersten Schwellwert Th1 und zweiten Schwellwert Th2 der RSSI-Ermittlung dienen, steigt vorteilhaft die Verläßlichkeit der Dekodierung von relevanten Nachbarzellkandidaten.

In der FIG 3 ist das erfindungsgemäße Verfahren als ein zeitliches Ablaufdiagramm entsprechend vorangehender Beschreibung zu der FIG 2 dargestellt.

## Patentansprüche

1. Verfahren zur Steuerung einer Intersystem-Verbindungsweiterschaltung von einem ersten Funk-Kommunikationssystem (RS1) mit einem ersten Übertragungsverfahren (FDD) zu einem zweiten Funk-Kommunikationssystem (RS2) mit einem zweiten Übertragungsverfahren (TDD, GSM),
**dadurch gekennzeichnet, daß**
eine von einer Teilnehmerstation (UE) ermittelte Übertragungsqualität (Q) bezüglich von Übertragungseigenschaften zu einer versorgenden Basisstation (NB) des ersten Funk-Kommunikationssystems (RS1) mit einem ersten Schwellwert (Th1) verglichen wird,
bei einem Unterschreiten des ersten Schwellwertes (Th1) ein Compressed Mode-Verfahren aktiviert wird, wobei die Teilnehmerstation (UE) innerhalb zumindest einer in einem Zeitrahmen des ersten Übertragungsverfahrens (FDD) generierten Übertragungslücke Übertragungseigenschaften von/zu zumindest einer Basisstation (BTS) des zweiten Funk-Kommunikationssystems (RS2) ermittelt,
bei einem Unterschreiten eines zweiten Schwellwertes (Th2) die Teilnehmerstation (UE) von der Basisstation (BTS) des zweiten Funk-Kommunikationssystems (RS2) in einem Organisationskanal (BCCH) gesendete Informationssequenzen detektiert, und
die Teilnehmerstation (UE) anhand der Ermittlungen zumindest eine für die Verbindungsweiterschaltung geeignete Basisstation (BTS, NB) auswählt.

2. Verfahren nach Anspruch 1,
**dadurch gekennzeichnet, daß**
von der Teilnehmerstation (UE) als Übertragungsqualität (Q) ein jeweiliger Empfangspegel (RSSI) ermittelt wird.

3. Verfahren nach Anspruch 1 oder 2,
**dadurch gekennzeichnet, daß**
eine Periodizität für die Generierung der Übertragungslücken abhängig von einer aktuellen Übertragungsqualität (Q) von/zu der versorgenden Basisstation (NB) des ersten Funk-Kommunikationssystems (RS1) gewählt wird.

4. Verfahren nach einem vorhergehenden Anspruch,
**dadurch gekennzeichnet, daß**
der Beginn und/oder die Periodizität für die Generierung der Übertragungslücke von der Basisstation (NB) des ersten Funk-Kommunikationssystems (RS1) ermittelt und zu der Teilnehmerstation (UE) signalisiert wird.

5. Verfahren nach einem vorhergehenden Anspruch,
**dadurch gekennzeichnet, daß**
das Compressed Mode-Verfahren für eine Signalübertragung in Aufwärts- und/oder in Abwärtsrichtung aktiviert wird.

6. Verfahren nach einem vorhergehenden Anspruch,
**dadurch gekennzeichnet, daß**
die Messungen der Teilnehmerstation (UE) gemeinsam mit weiteren charakteristischen Werten über Übertragungseigenschaften der Funkschnittstelle zwischen der Basisstation (NB) des ersten Funk-Kommunikationssystems (RS1) und der Teilnehmerstation (UE) und/oder zwischen einer Basisstation (BTS) des zweiten Funk-Kommunikationssystems (RS2) und der Teilnehmerstation (UE) signalisiert werden.

7. Verfahren nach einem vorhergehenden Anspruch,
**dadurch gekennzeichnet, daß**
das erste Funk-Kommunikationssystem (RS1) ein FDD-Übertragungsverfahren (FDD) unterstützt, und das zweite Funk-Kommunikationssystem (RS2) ein TDD-Übertragungsverfahren (TDD) oder ein GSM-Übertragungsverfahren (GSM) unterstützt.

8. Basisstationssystem (BSS) eines Funk-Kommunikationssystems (RS1, RS2) mit Mitteln zur Durchführung der schritte des Verfahrens nach einem vorhergehenden Anspruch, wobei
das Funk-Kommunikationssystem (RS1, RS2) als ein Mobilfunksystem oder als ein drahtloses Teilnehmeranschlußsystem verwirklicht ist.

## Claims

1. Method for controlling an intersystem connection transfer from a first radiocommunication system (RS1) having a first transmission method (FDD) to a second radiocommunication system (RS2) having a second transmission method (TDD, GSM), **characterized in that** a transmission quality (Q) determined by a subscriber station (UE) with respect to transmission characteristics to a supplying base station (NB) of the first radiocommunication system (RS1) is compared with a first threshold value (Th1),
a compressed mode method is activated if the value falls below the first threshold (Th1), wherein, within at least one transmission gap generated in a time frame of the first transmission method (FDD), the subscriber station (UE) determines transmission characteristics from/to at least one base station (BTS) of the second radiocommunication system (RS2),
the subscriber station (UE) detects information sequences transmitted by the base station (BTS) of the second radiocommunication system (RS2) in a control channel (BCCH) if the value falls below a second threshold (Th2), and
on the basis of the measurements, the subscriber station (UE) selects at least one base station (BTS, NB) suitable for the transfer of a connection.

2. Method according to Claim 1, **characterized in that** a respective receiving level (RSSI) is determined as transmission quality (Q) by the subscriber station (UE).

3. Method according to Claim 1 or 2, **characterized in that** a periodicity for the generation of the transmission gaps is selected depending on a current transmission quality (Q) from/to the supplying base station (NB) of the first radiocommunication system (RS1).

4. Method according to one of the preceding claims, **characterized in that** the start and/or the periodicity for the generation of the transmission gap is determined by the base station (NB) of the first radiocommunication system (RS1) and signalled to the subscriber station (UE).

5. Method according to one of the preceding claims, **characterized in that** the compressed mode method is activated for a signal transmission in the uplink and/or in the downlink direction.

6. Method according to one of the preceding claims, **characterized in that** the measurements of the subscriber station (UE) are signalled together with further characteristic values about transmission characteristics of the radio interface between the base station (NB) of the first radiocommunication system (RS1) and the subscriber station (UE) and/or between a base station (BTS) of the second radiocommunication system (RS2) and the subscriber station (UE).

7. Method according to one of the preceding claims, **characterized in that** the first radiocommunication system (RS1) supports an FDD transmission method (FDD), and the second radiocommunication system (RS2) supports a TDD transmission method (TDD) or a GSM transmission method (GSM).

8. Base station system (BSS) of a radiocommunication system (RS1, RS2) having means for carrying out the steps of the method according to one of the preceding claims, in which the radiocommunication system (RS1, RS2) is realized as a mobile communication system or as a wireless subscriber line system.

## Revendications

1. Procédé de commande d'une retransmission de liaison intersystème d'un premier réseau de radiocommunication (RS1) avec un premier procédé de transmission (FDD) vers un deuxième réseau de radiocommunication (RS2) avec un deuxième procédé de transmission (TDD, GSM),
**caractérisé en ce que**
- une qualité de transmission (Q) déterminée par une station d'usager (UE), relative à des caractéristiques de transmission vers une station de base de desserte (NB) du premier système de radiocommunication (RS1), est comparée avec une première valeur seuil (Th1)
- en cas de dépassement par le bas de la première valeur seuil (Th1), un procédé Compressed Mode est activé, la station d'usager (UE) déterminant, dans au moins un trou de transmission généré dans une trame temporelle du premier procédé de transmission (FDD), des caractéristiques de transmission de/vers au moins une station de base (BTS) du deuxième système de radiocommunication (RS2),
- en cas de dépassement par le bas d'une deuxième valeur seuil (Th2), la station d'usager (UE) détecte des séquences d'information émises par la station de base (BTS) du deuxième système de radiocommunication (RS2) dans un canal d'organisation (BCCH) et
- la station d'usager (UE) sélectionne, sur la base de ce qui a été déterminé, au moins une station de base appropriée pour la retransmission de liaison.

2. Procédé selon la revendication 1, **caractérisé en ce qu'**un niveau de réception respectif (RSSI) est déterminé par la station d'usager (UE) en tant que qualité de transmission (Q).

3. Procédé selon la revendication 1 ou 2, **caractérisé en ce qu'**une périodicité pour la production des trous de transmission est choisie en fonction d'une qualité de transmission actuelle (Q) de/vers la station de base de desserte (NB) du premier système de radiocommunication (RS1).

4. Procédé selon une revendication précédente, **caractérisé en ce que** le début et/ou la périodicité pour la production du trou de transmission sont déterminés par la station de base (NB) du premier système de radiocommunication (RS1) et signalés à la station d'usager (UE) .

5. Procédé selon une revendication précédente, **caractérisé en ce que** le procédé Compressed Mode est activé pour une transmission de signaux dans le sens montant et/ou dans le sens descendant.

6. Procédé selon une revendication précédente, **caractérisé en ce que** les mesures de la station d'usager (UE) sont signalées conjointement avec d'autres valeurs caractéristiques concernant des caractéristiques de transmission de l'interface radio entre la station de base (NB) du premier système de radiocommunication (RS1) et la station d'usager (UE) et/ou entre une station de base (BTS) du deuxième système de radiocommunication (RS2) et la station d'usager (UE).

7. Procédé selon une revendication précédente, **caractérisé en ce que** le premier système de radiocommunication (RS1) supporte un procédé de transmission FDD (FDD) et le deuxième système de radiocommunication (RS2) supporte un procédé de transmission TDD (TDD) ou un procédé de transmission GSM (GSM).

8. Système de stations de base (BSS) d'un système de radiocommunication (RS1, RS2), avec des moyens permettant l'exécution des étapes du procédé selon une revendication précédente, le système de radiocommunication (RS1, RS2) étant réalisé sous la forme d'un système radio mobile ou sous la forme d'un système de raccordement d'usagers sans fil.
